# EUROPEAN PATENT APPLICATION

(11) **EP 0 685 545 A1**
(43) Date of publication of application: **06.12.1995**
(21) Application number: 95108326.0
(22) Date of filing: 30.05.1995
(51) Int. Cl.: C09D 183/14, C09D 183/04

(54) **Silicone compositions for making of cured release coatings**

(30) Priority: 31.05.1994 JP 141209/94
(71) Applicant: Dow Corning Toray Silicone Company, Limited, Tokyo 103 (JP)
(72) Inventor: Kaiya, Nobuo, Dow Corning Toray Silicone Co., Ltd., Ichihara-shi, Chiba Prefecture (JP); Kobayashi, Hideki, Dow Corning Toray Sil. Co.,Ltd., Ichihara-shi, Chiba Prefecture (JP)
(74) Representative: Spott, Gottfried, Dr.

(57) **Abstract**

This disclosure introduces silicone compositions that form cured release coatings which exhibit excellent release properties against tacky substances and which do not impair the residual adhesion of tacky substances.

Our silicone composition comprises:
(A) 100 weight parts of a coat-forming silicone composition into which there is admixed
(B) 0.5 to 500 weight parts of an organosilicon polymer with the following average unit formula 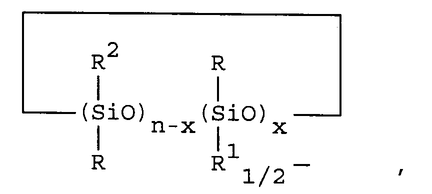 wherein R represents C₁ to C₁₀ monovalent hydrocarbon groups that are free of aliphatic unsaturation; R¹ represents organic groups selected from C₂ to C₂₀ alkylene groups or organic groups with the formulas -R³(OR³)_{y}- and -R³-(R₂SiO)_{z}R₂Si-R³-, R³ denotes C₂ to C₂₀ alkylene groups which may be the same or different, y is an integer with a value of 1 or more, and z is zero or an integer with a value of 1 or more; R² represents groups selected from C₁ to C₁₀ monovalent hydrocarbon groups, the hydrogen atom, C₁ to C₁₀ alkoxy groups, and the hydroxyl group; n = 3 to 20; x = 1 to 13; and n ≧ x.

## Description

The use of organopolysiloxane silicone release compositions to form release coatings on the surface of various substrates is known in the art. These substrates include paper, cardboard, laminated paper, synthetic resin films, fabrics, synthetic fibers, and metal foils. Cured coatings for releasing a variety of tacky substances are formed by coating the substrate surface with an organopolysiloxane silicone release composition and thereafter curing the composition.

One drawback generally associated with these compositions is the very light release resistance of the coatings afforded by their cure. This has made it necessary to add a controlled-release additive to these compositions with the goal of adjusting their release resistance. These controlled-release additives are exemplified by MQ silicone copolymers comprised of R'₃SiO_{1/2} and SiO_{4/2} units wherein R' represents monovalent hydrocarbon groups having no more than 2 carbons as described in U.S. Patent 3,527,659 and EP-A 0108208, or by MQ silicone copolymers comprised of R'₃SiO_{1/2}, (CH₂=CH)R'₂SiO_{1/2}, and SiO_{4/2} units wherein R' represents monovalent hydrocarbon groups having no more than 2 carbons as disclosed in CA-A 1064640.

Unfortunately, these silicone release compositions of the prior art suffer from a large migration of the silicone component into the tacky substance, which results in a substantial decline in the residual adhesion of said substance. Another problem arises from the fact that these silicone copolymers are generally solids at room temperature. As a consequence, the compositions also have an elevated viscosity, which degrades their coatability on the surface of various substrates.

It is an object of this invention to introduce silicone release compositions that yield cured release coatings which exhibit excellent release properties against tacky substances without impairing the residual adhesion of said substances.

The present invention introduces silicone compositions that form cured release coatings (also called silicone release compositions) that exhibit excellent release properties against tacky substances without impairing the residual adhesion of said substances.

Our silicone release compositions comprise
(A) 100 weight parts of a coat-forming silicone composition into which there is admixed
(B) 0.5 to 500 weight parts organosilicon polymer with the following average unit formula 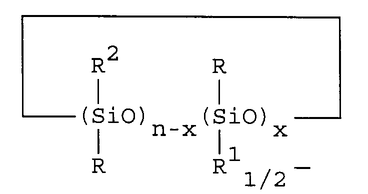 wherein each R independently is a C₁ to C₁₀ monovalent hydrocarbon groups that are free of aliphatic unsaturation.

R¹ is an organic group selected from C₂ to C₂₀ alkylene groups, organic groups with the formula -R³(OR³)_{y}- where each R³ is independently a C₂ to C₂₀ alkylene group and y is an integer with a value of 1 or more, and organic groups with the formula -R³-(R₂SiO)_{z}R₂Si-R³- z is an integer with a value of 1 or more;
R² is selected from C₁ to C₁₀ monovalent hydrocarbon groups, the hydrogen atom, C₁ to C₁₀ alkoxy groups, and hydroxyl group.

n is an integer with a value of at least 3 but no greater than 20. x is an integer with a value of at least 1 but no greater than 13. n is equal to or greater than x.

Component (A) consists of coat-forming silicone compositions that cure to yield silicone coatings capable of releasing various tacky substances. The nature of this composition is not critical, and those already known in the art may be used. Component (A) is exemplified by coat-forming silicone compositions which are cured by reaction mechanisms selected from addition reactions, condensation reactions, organoperoxidereactions, and exposure to high-energy radiation, such as ultraviolet radiation, electron beams, and others. Preferred mechanisms are addition reaction and condensation reaction compositions.

Preferred addition reaction compositions are compositions comprising:
(a) 100 weight parts of an organopolysiloxane that contains at least 2 alkenyl groups in each molecule and which has a viscosity at 25°C of at least 40 centipoise (cP or mPa.s),
(b) 0.5 to 90 weight parts of an organohydrogenpolysiloxane that contains at least 3 silicon-bonded hydrogen atoms in each molecule and which has a viscosity at 25°C of 1 to 1,000 cP(mPa.s), and
(c) a platinum catalyst, in a quantity that provides 0.1 to 1,000 weight parts of a platinum metal for each 1,000,000 weight parts of the combined amount of components (a) and (b).

The organopolysiloxane (a) useful in our addition reaction composition must have at least 2 alkenyl groups in each molecule. Component (a) is exemplified by an organopolysiloxane with the average unit formula R⁴ₐSiO_{(4-a)/2} where R⁴ is a monovalent hydrocarbon group and subscript a has a value of 1.95 to 2.05. R⁴ is exemplified by alkyl groups such as methyl, ethyl, propyl and butyl; alkenyl groups such as vinyl, allyl, butenyl, pentenyl and hexenyl; aryl groups such as phenyl, tolyl and xylyl; aralkyl groups such as benzyl and phenethyl; and haloalkyl groups such as 3-chloropropyl and 3,3,3-trifluoropropyl. R⁴ is preferably methyl. The molecular structure of component (a) is not critical and is exemplified by straight-chain, cyclic, network, and partially branched straight-chain. Straight-chain structures are preferred. The endblocking groups for the molecular chain are exemplified by trimethylsiloxy, dimethylvinylsiloxy, dimethylphenylsiloxy, and dimethylhydroxysiloxy. Component (a) must have a viscosity at 25°C of at least 40 cP(mPa.s), while the upper viscosity limit for this component is such that it includes the viscosity of gums. When component (a) has a viscosity below 40 cP(mPa.s), too much of the silicone release composition will permeate into the substrate. When the silicone release composition is used as a solvent-free formulation, the viscosity of component (a) at 25°C preferably ranges from 40 to 10,000 cP(mPa.s), and more preferably ranges from 100 to 5,000 cP(mPa.s). When this composition is used as a solvent-based formulation, the viscosity of component (a) at 25°C preferably ranges from 100,000 cP(mPa.s) up to that of gums, and more preferably ranges from 500,000 cP(mPa.s) to gums.

Organopolysiloxane (a) is further exemplified by the following:
dimethylvinylsiloxy-endblocked dimethylpolysiloxanes,
dimethylvinylsiloxy-endblocked dimethylsiloxane-methylvinylsiloxane copolymers,
dimethylvinylsiloxy-endblocked dimethylsiloxane-methylphenylsiloxane copolymers,
trimethylsiloxy-endblocked methylvinylpolysiloxanes,
trimethylsiloxy-endblocked dimethylsiloxane-methylvinylsiloxane copolymers,
trimethylsiloxy-endblocked dimethylsiloxane-methyl(5-hexenyl)siloxane copolymers,
dimethylvinylsiloxy-endblocked dimethylsiloxane-methylvinylsiloxane-methylphenylsiloxane copolymers,
dimethylhydroxysiloxy-endblocked methylvinylpolysiloxanes, and
dimethylhydroxysiloxy-endblocked dimethylsiloxane-methylvinylsiloxane copolymers.

The organohydrogenpolysiloxane (b) in our addition reaction composition functions as a crosslinker, and it must have a viscosity at 25°C of 1 to 1,000 cP(mPa.s) and must contain at least 3 silicon-bonded hydrogen atoms in each molecule. Component (b) is exemplified by an organohydrogenpolysiloxane with the average unit formula R⁵_{b}SiO_{(4-b)/2} where R⁵ is selected from hydrogen atom or monovalent hydrocarbon groups, excluding alkenyl groups and subscript b ranges from 1.5 to 3.0. R⁵ is hydrogen atom; alkyl groups, such as methyl, ethyl, propyl and butyl; aryl groups, such as phenyl, tolyl and xylyl; aralkyl groups, such as benzyl or phenethyl; and haloalkyl groups such as 3-chloropropyl or 3,3,3-trifluoropropyl. Methyl is preferred when R⁵ is a monovalent hydrocarbon group. The molecular structure of component (b) is not critical and is exemplified by straight-chain, cyclic, network, and partially branched straight-chain. Straight-chain structures are preferred. The endblocking groups for the molecular chain are exemplified by trimethylsiloxy, dimethylphenylsiloxy, dimethylhydrogensiloxy, and dimethylhydroxysiloxy. The viscosity of component (b) at 25°C must fall in the range from 1 to 1,000 cP(mPa.s) and preferably ranges from 5 to 500 cP(mPa.S). When component (b) has a viscosity less than 1 cP(mPa.s), it volatilizes so readily that the resulting silicone release composition will be unstable. When component (b) has a viscosity greater than 1,000 cP(mPa.s) it causes problems such as a lengthy cure time and a reduced releasability for the ultimately obtained cured release coating.

Component (b) is exemplified by the following:
trimethylsiloxy-endblocked methylhydrogenpolysiloxanes,
trimethylsiloxy-endblocked dimethylsiloxane-methylhydrogensiloxane copolymers,
dimethylhydrogensiloxy-endblocked dimethylpolysiloxanes,
dimethylhydrogensiloxy-endblocked dimethylsiloxane-methylhydrogensiloxane copolymers,
methylhydrogensiloxane cyclics, and
cyclic methylhydrogensiloxane-dimethylsiloxane copolymers.

Component (b) is added at 0.5 to 90 weight parts per 100 weight parts of component (a), and is preferably added at 1 to 80 weight parts per 100 weight parts of component (a). The cure of the resulting silicone release composition is unacceptable when component (b) is added at less than 0.5 weight part per 100 weight parts, while additions in excess of 90 weight parts cause a reduced releasability in the ultimately obtained release coating.

The platinum catalyst (c) in our addition reaction composition functions to cure the composition by accelerating the addition reaction between components (a) and (b). Component (c) is exemplified by chloroplatinic acid, alcohol solutions of chloroplatinic acid, chloroplatinic acid/olefin complexes, chloroplatinic acid/vinylsiloxane complexes, chloroplatinic acid/ketone complexes, platinum supported on alumina powder, platinum supported on silica powder, and platinum black. Component (c) is added in a quantity that provides 0.1 to 1,000 weight parts of platinum metal for each 1,000,000 weight parts of the combination of components (a) and (b).

Our addition reaction composition is essentially comprised of the components (a) - (c), but they also contain an addition-reaction inhibitor for the purpose of providing our composition with storage stability at room temperature. Said addition-reaction inhibitors are alkynyl alcohols such as 3-methyl-1-butyn-3-ol, 3,5-dimethyl-1-hexyn-3-ol, 3-methyl-1-pentyn-3-ol and phenylbutynol; or 3-methyl-3-penten-1-yne; 3,5-dimethyl-1-hexyn-3-ene; benzotriazole; and methylvinylsiloxane cyclics. This inhibitor may be added in any desired quantity, but generally will be used in the range of 0.001 to 5 weight parts per 100 weight parts of component (a).

Preferred for our condensation reaction compositions are compositions comprising
(a') 100 weight parts of an organopolysiloxane that contains at least 2 silanol groups in each molecule and which has a viscosity at 25°C of at least 40 cP(mPa.s),
(b') 0.5 to 90 weight parts of an organohydrogenpolysiloxane that contains at least 2 silicon-bonded hydrogen atoms in each molecule and that has a viscosity at 25°C of 1 to 1,000 cP(mPa.s), and
(c') 0.01 to 20 weight parts of a metal salt of an organic acid.

The organopolysiloxane (a') in our condensation reaction composition must have at least 2 silanol groups in each molecule. Component (a') is exemplified by and organopolysiloxane with the average unit formula R⁶_{c}SiO_{(4-c)/2} where R⁶ is selected from a monovalent hydrocarbon group or a hydroxyl group; and subscript c has a value of 1.95 to 2.05. The monovalent hydrocarbon groups of R⁶ are exemplified by alkyl groups such as methyl, ethyl, propyl and butyl; alkenyl groups such as vinyl, allyl, butenyl, pentenyl and hexenyl; aryl groups such as phenyl, tolyl and xylyl; aralkyl groups such as benzyl and phenethyl; and haloalkyl groups such as 3-chloropropyl and 3,3,3-trifluoropropyl. Methyl is preferred as the monovalent hydrocarbon group. The molecular structure of component (a') is not critical and is exemplified by straight-chain, cyclic, network, and partially branched straight-chain. Straight-chain structures are preferred. The endblocking groups for the molecular chain are dimethylhydroxysiloxy or methylphenylhydroxysiloxy. Component (a') must have a viscosity at 25°C of at least 40 cP(mPa.s), while the upper viscosity limit for this component includes the viscosity of gums. Too much of the resulting silicone release composition will permeate into the substrate when component (a') has a viscosity below 40. When the silicone release composition is used as a solvent-free formulation, the viscosity of component (a') at 25°C preferably ranges from 40 to 10,000 cP(mPa.s) and more preferably ranges from 100 to 5,000. When the composition is used as a solvent-based formulation, the viscosity of component (a') at 25°C preferably ranges from 100,000 cP(mPa.s) up to that of gums, and more preferably ranges from 500,000 cP(mPa.s) to that of gums.

Component (a') is further exemplified by the following:
dimethylhydroxysiloxy-endblocked dimethylpolysiloxanes,
dimethylhydroxysiloxy-endblocked dimethylsiloxane-methylvinylsiloxane copolymers,
dimethylhydroxysiloxy-endblocked dimethylsiloxane-methylphenylsiloxane copolymers,
dimethylhydroxysiloxy-endblocked methylvinylpolysiloxanes,
dimethylhydroxysiloxy-endblocked dimethylsiloxane-methylphenylpolysiloxane copolymers,
dimethylhydroxysiloxy-endblocked dimethylsiloxane-methyl(5-hexenyl)siloxane copolymers, and
dimethylhydroxysiloxy-endblocked methylphenylpolysiloxanes.

The organohydrogenpolysiloxane (b') in our condensation reaction composition functions as a crosslinker. Organohydrogenpolysiloxane (b') must have a viscosity at 25°C of 1 to 1,000 cP(mPa.s) and must contain at least 2 silicon-bonded hydrogen atoms in each molecule. Component (b') is exemplified by an organohydrogenpolysiloxane with the average unit formula R⁷_{d}SiO_{(4-d)/2} where R⁷ is selected from hydrogen atom or monovalent hydrocarbon groups and subscript d ranges from 1.5 to 3.0. Said R⁷ Monovalent hydrocarbon groups of R⁷ are exemplified by alkyl groups such as methyl, ethyl, propyl and butyl; alkenyl groups such as vinyl, allyl, butenyl, pentenyl and hexenyl; aryl groups such as phenyl, tolyl and xylyl; aralkyl groups such as benzyl and phenethyl; and haloalkyl groups such as 3-chloropropyl and 3,3,3-trifluoropropyl. Methyl is preferred among the monovalent hydrocarbon groups. The molecular structure of component (b') is not critical and may be exemplified by straight-chain, cyclic, network, and partially branched straight-chain. Straight-chain structures are preferred. The endblocking groups for the molecular chain are exemplified by trimethylsiloxy, dimethylphenylsiloxy, dimethylhydrogensiloxy, and dimethylhydroxysiloxy. The viscosity of component (b') at 25°C must fall in the range from 1 to 1,000 cP(mPa.s) and preferably ranges from 5 to 500. When component (b') has a viscosity less than 1 cP(mPa.s), it volatilizes so readily that the resulting silicone release composition will be unstable. When component (b') has a viscosity greater than 1,000 cP(mPa.s) it causes problems as a lengthy cure time and a reduced releasability for the ultimately obtained cured release coating.

Organohydrogenpolysiloxane (b') is further exemplified by the following:
trimethylsiloxy-endblocked methylhydrogenpolysiloxanes,
trimethylsiloxy-endblocked dimethylsiloxane-methylhydrogensiloxane copolymers,
dimethylhydrogensiloxy-endblocked dimethylpolysiloxanes,
dimethylhydrogensiloxy-endblocked dimethylsiloxane-methylhydrogensiloxane copolymers,
methylhydrogensiloxane cyclics, and
cyclic methylhydrogensiloxane-dimethylsiloxane copolymers.

Component (b') is added at 0.5 to 90 weight parts per 100 weight parts of component (a'), and is preferably added at 1 to 80 weight parts per 100 weight parts of component (a'). The cure of the resulting silicone release composition is unacceptable when component (b') is added at less than 0.5 weight part per 100 weight parts. Additions in excess of 90 weight parts (b') will cause a reduced releasability in the ultimately obtained release coating.

The metal salt of organic acid comprising component (c') in our condensation reaction composition functions to cure the composition by accelerating the condensation reaction between components (a') and (b'). Component (c') is exemplified by dibutyltin diacetate, dibutyltin dioctoate, dibutyltin dilaurate, dioctyltin dilaurate, tin octoate, zinc naphthoate, and iron octoate. Component (c') is added at 0.01 to 20 weight parts per 100 weight parts of component (a').

Our coat-forming silicone composition (A) may also contain the following on an optional basis: fillers such as silica and the like, organic solvents, adhesion promoters, colorants, and pigments. The use of an organic solvent is preferred because it improves the storage stability of our silicone release composition and also improves substrate coatability. No specific limitation applies to the organic solvent of the present invention as long as it is capable of homogeneous dissolution of the coat-forming silicone composition. Useable organic solvents are aromatic hydrocarbons such as benzene, toluene and xylene; aliphatic hydrocarbons such as pentane, hexane and heptane; halogenated hydrocarbons such as trichloroethylene, perchloroethylene, trifluoromethylbenzene, 1,3-bis(trifluoromethyl)benzene and methylpentafluorobenzene; and ethyl acetate or methyl ethyl ketone. The general range of addition for the organic solvent is 0 to 10,000 weight parts per 100 weight parts of component (A).

Our silicone release compositions also comprise (B), an organosilicon polymer with the following average unit formula 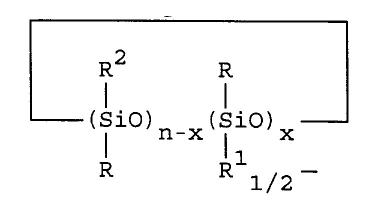
admixed with the silicone composition (A). The organosilicon polymer, which functions as a controlled-release additive, imparts an optimal release resistance to the cured release coatings into which it is blended. Component (B) also functions to inhibit silicone component migration into the tacky substance and thereby prevents the loss in residual adhesion of the tacky substance.

R is a C₁ to C₁₀ monovalent hydrocarbon group that is free of aliphatic unsaturation and is exemplified by alkyl groups such as methyl, ethyl, propyl, butyl, pentyl and octyl; aryl groups such as phenyl, tolyl and xylyl; aralkyl groups such as benzyl and phenethyl; and haloalkyl groups such as 3-chloropropyl or 3,3,3-trifluoropropyl. R is preferably methyl.

R¹ is typically selected from C₂ to C₂₀ alkylene groups, organic groups with the formula -R³(OR³)_{y}-, and organic groups with the formula -R³-(R₂SiO)₂R₂Si-R³-. Said alkylene groups are ethylene, propylene, butylene, pentylene, hexylene, and octylene. R³ also represents C₂ to C₂₀ alkylene groups, which may be the same or may differ, while y is an integer with a value of at least 1. This organic group is either -C₃H₆OC₃H₆- or -C₃H₆(OC₂H₄)₆OC₃H₆-. The R and R³ in the organic group -R³-(R₂SiO)_{z}R₂Si-R³- are the same as above, while z is zero or an integer with a value of 1 or more. This organic group is exemplified by -C₂H₄-Me₂Si-C₂H₄-, -C₂H₄-Me₂SiOMe₂Si-C₂H₄-, and -C₆H₁₂-Me₂SiOMe₂Si-C₆H₁₂- where Me represents methyl.

R² is selected from C₁ to C₁₀ monovalent hydrocarbon groups, hydrogen atom, C₁ to C₁₀ alkoxy groups, and hydroxyl group. The C₁ to C₁₀ monovalent hydrocarbon groups are the same groups as listed above for R, and are also represented by alkenyl groups such as vinyl, allyl, butenyl, pentenyl, hexenyl, and octenyl. The C₁ to C₁₀ alkoxy groups are methoxy, ethoxy, propoxy, and butoxy. R² is preferably hydrogen or alkenyl when (A) is an addition reaction composition. R² is preferably hydrogen, hydroxyl, or C₁ to C₁₀ alkoxy when (A) is a condensation reaction composition.

The subscript n is an integer with a value of at least 3 but no more than 20. The subscript x is a number with a value of at least 1 but no more than 13. n is equal to or greater than x. 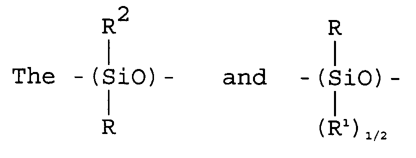
siloxane units in organosilicon polymer (B) are arranged in an alternating pattern, randomly, or in a block pattern. With regard to the steric structure, a mixture of optical isomers may be present or optical activity may be exhibited. The weight average molecular weight of organosilicon polymer (B) is preferably at least 1,000. There are no particular limitations on the viscosity (25°C) of organosilicon polymer (B), but the viscosity range of 10 to 10,000 cP(mPa.s) is preferred due to the corresponding excellent handling characteristics of our final silicone release composition and the excellent releasability of the ultimately cured release coating. The organosilicon polymer (B) is generally soluble in organic solvents such as toluene, xylene, and others. Because organosilicon polymer (B) does not raise the viscosity of our silicone release compositions, it is highly adapted for use as a controlled-release additive for solvent-free silicone release compositions.

The organosilicon polymer (B) is exemplified by straight-chain organosilicon polymers whose main chains are comprised of repeat unit(s) with the following formula 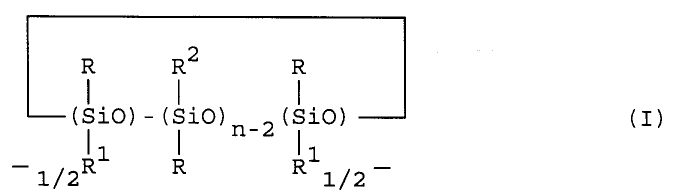
and whose terminals (endblocks) are selected from groups with the following formula (II) 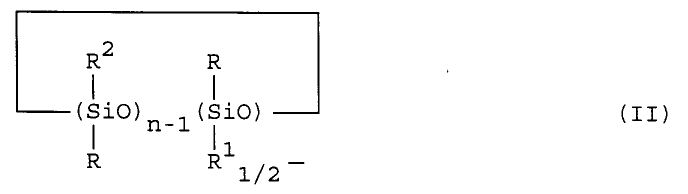
and by organosilicon polymers whose main chains are comprised of units with the following formula (III) 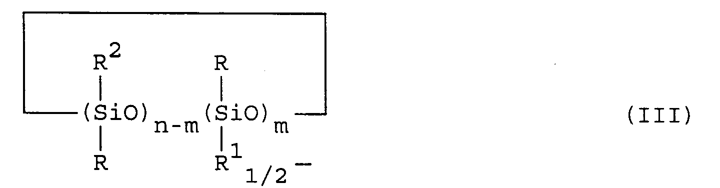
and whose terminals are selected from groups with the preceding formula (II), with the proviso in the case of this latter organosilicon polymer that it contains in each molecule at least one (III) unit in which m is at least 3. The R, R¹, R², and n in the preceding formulas are as defined above. The subscript m is an integer with a value of at least 2 but no more than 13. However, there must be at least one m which is an integer with a value of at least 3 since there must be at least one (III) unit in each molecule in which m is at least 3.

Organosilicon polymer (B) is represented by the polymers below, in which Me = methyl, Et = ethyl, and Vi = vinyl:
an organosilicon polymer whose main chain is comprised of a repeat unit with the formula 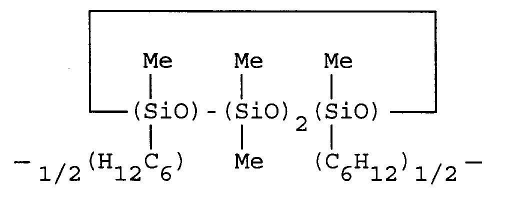
and whose terminals are groups with the following formula 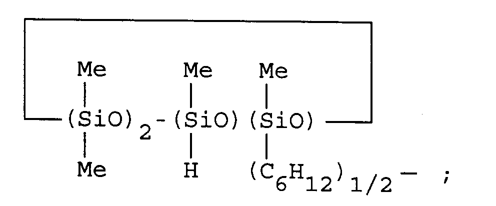
an organosilicon polymer whose main chain is comprised of units with the following formulas 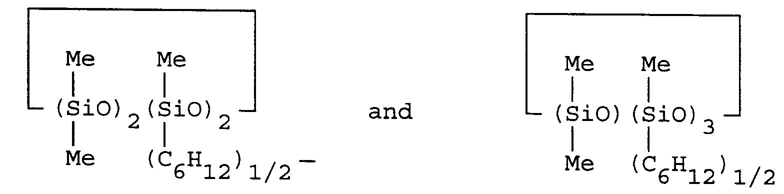
and whose terminals are groups with the following formula 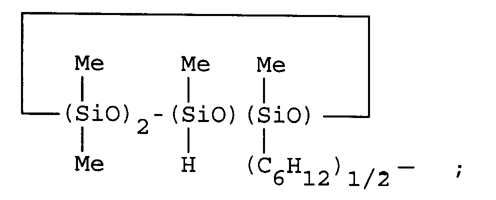
an organosilicon polymer whose main chain is comprised of units with the following formulas 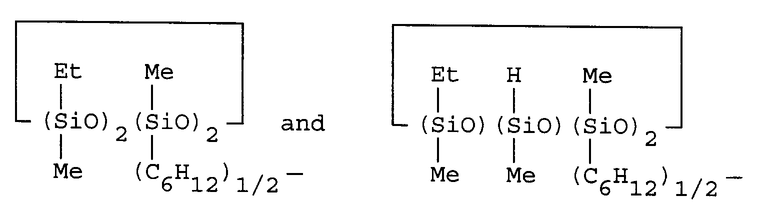
and whose terminals are groups with the following formula 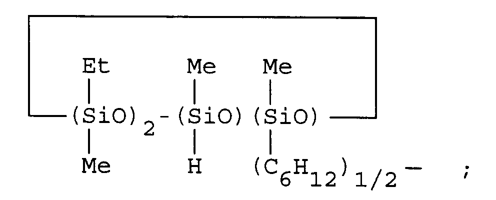
an organosilicon polymer whose main chain is comprised of units with the following formulas 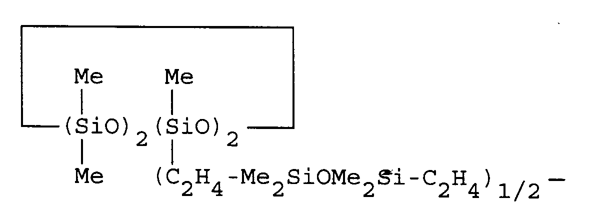
and 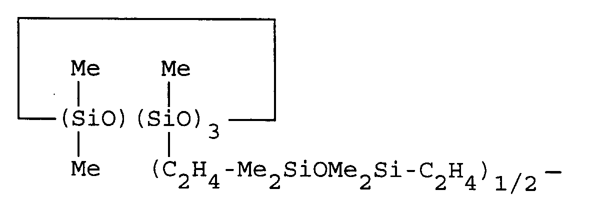
and whose terminals are groups with the following formula 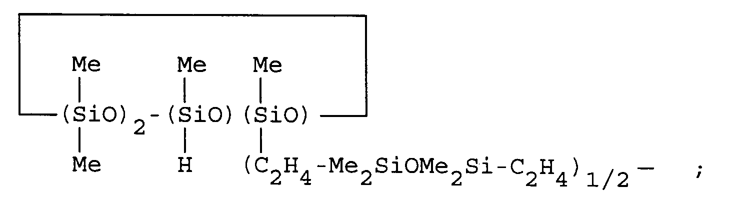
an organosilicon polymer whose main chain is comprised of a repeat unit with the formula 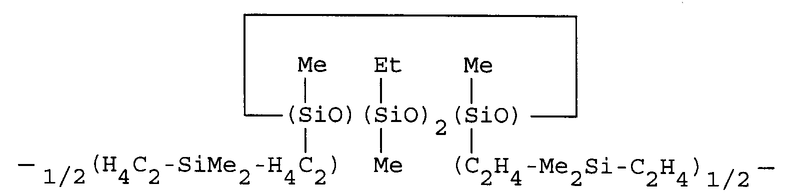
and whose terminals are groups with the formula 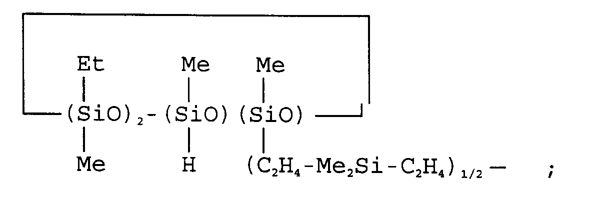
an organosilicon polymer with the formula 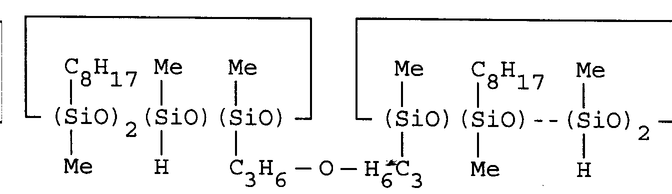
an organosilicon polymer whose main chain is comprised of a repeat unit with the formula 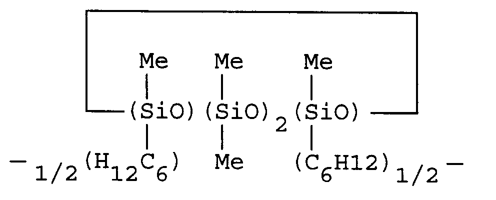
and whose terminals are groups with the formula 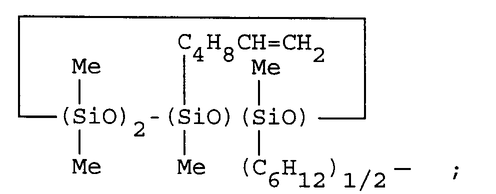
organosilicon polymer whose main chain is comprised of units with the formulas 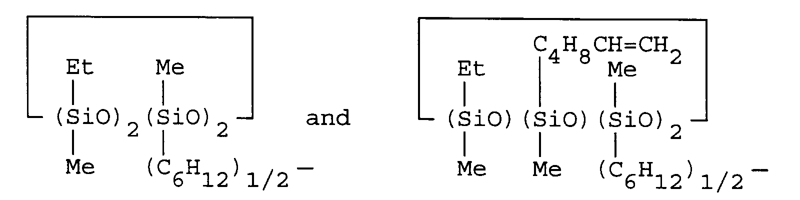
and whose terminals are groups with the formula 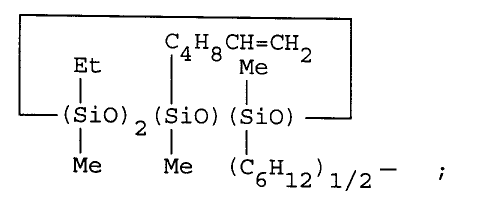
an organosilicon polymer whose main chain is comprised of a repeat unit with the formula 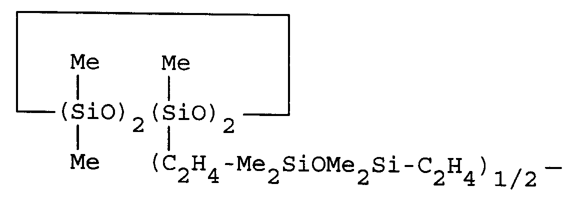
and whose terminals are groups with the formula 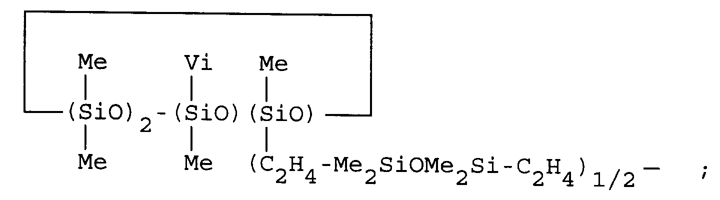
organosilicon polymer whose main chain is comprised of a repeat unit with the formula 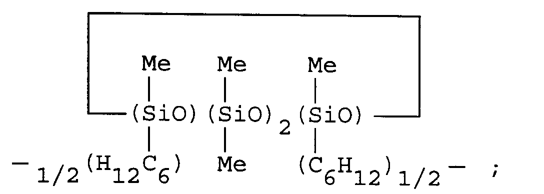
and whose terminals are groups with the formula 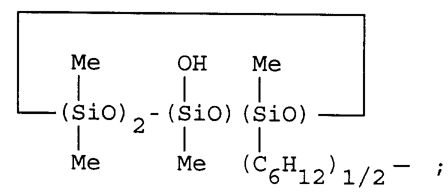
and
an organosilicon polymer whose main chain is comprised of units with the formulas 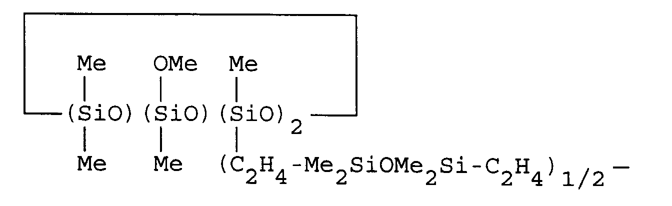
and 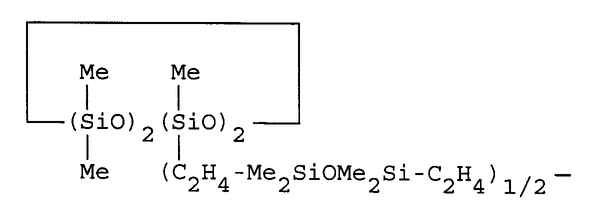
and whose terminals are groups with the formula 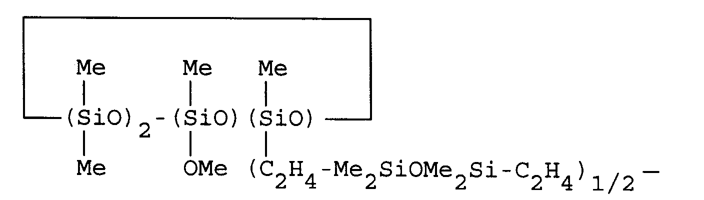
The method for preparing organosilicon polymer (B) is not critical. One method, for example, consists of running an addition polymerization between
(i) cyclic siloxanes with the following general formulas 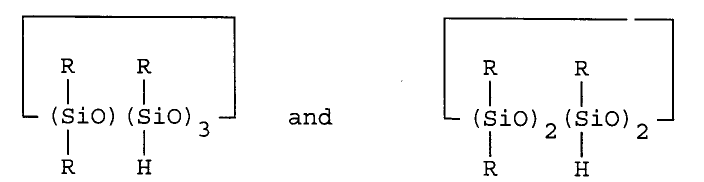 where R is a C₁ to C₁₀ monovalent hydrocarbon group that is free of aliphatic unsaturation and
(ii) a hydrocarbon group selected from C₃ to C₂₀ unsaturated aliphatic hydrocarbons that contain 2 carbon-carbon double bonds,
   C₂ to C₂₀ unsaturated aliphatic hydrocarbons that contain 1 carbon-carbon triple bond,
   compounds with the formula R⁸(OR³)_{q}OR⁸ where R³ is defined as above, R⁸ is a C₂ to C₂₀ alkenyl group, and q is zero or an integer with a value of at least 1, and
   organosilicon compounds with the formula R⁸(R₂SiO)ᵣR₂SiR⁸ where R and R⁸ are defined as above, and r is zero or an integer with a value of at least 1; in the presence of
(iii) a hydrosilylation reaction catalyst.

When it is desired to synthesize a straight-chain organosilicon polymer whose main chain is comprised of formula (I) units, component (i) must be a cyclic siloxane that contains two SiH-bearing siloxane units. When it is desired to synthesize organosilicon polymer whose main chain is comprised of formula (III) units, component (i) must contain at least one cyclic siloxane molecule that contains at least 3 SiH-bearing siloxane units. Any unreacted SiH remaining in the product organosilicon polymer can be easily converted into alkoxy or hydroxyl.

Organosilicon polymer (B) is added in the range of 0.5 to 500 weight parts per 100 weight parts of (A). The release resistance of the corresponding cured release coating will be too low when less than 0.5 weight part component (B) is added, while the cured coating will present a very heavy release resistance when more than 500 weight parts is added. When component (A) is either an addition reaction or a condensation reaction composition, component (B) is preferably added at 1.0 to 500 weight parts per 100 weight parts component (A) and is more preferably added at 2.0 to 200 weight parts.

Our silicone release composition invention is prepared by adding organosilicon polymer (B) to component (A), either during or after preparation of the coat-forming silicone composition (A). While no specific restrictions apply to the conditions for curing this silicone release composition, the cured release coating is preferably produced at temperatures ranging from 50°C to 200°C.

The silicone release composition of this invention forms cured release coatings that exhibit an optimal release resistance against a variety of tacky substances. These optimized release coatings can be formed on the surface of such substrates as paper, cardboard, laminated paper, synthetic resin films, fabrics and textiles, synthetic fibers, metal foils, and the like. Substrates bearing our cured release coatings are used for process paper, asphalt-lining paper, tapes, labels, and other applications. Moreover, use of a relatively low-viscosity organosilicon polymer (B) in our silicone release composition makes possible the preparation and application of solvent-free formulations.

So that those skilled in the art can understand and appreciate the invention taught herein, the following examples are presented. The values reported for the viscosity in the examples were measured at 25°C. The release resistance of the cured release coatings and the residual adhesion by tacky substances were measured by the following methods.

### Release Resistance

The silicone release composition was coated at approximately 1.0 g/m² on polyethylene-laminated kraft paper, and a cured release coating was then produced by heating in a forced circulation oven for 30 seconds at 160°C. An acrylic-based, pressure-sensitive adhesive (Oribine™ BPS8170, from Toyo Ink Mfg. Company, Limited) was coated on the resulting cured release coating and followed by heating for 3 minutes at 75°C in a forced circulation oven. A 25-micrometer polyethylene terephthalate film was subsequently applied to the acrylic-based pressure-sensitive adhesive (PSA), and the assembly was then held at 22°C and 60% humidity under a load of 20 g_{f}/cm². A 5cm wide strip was thereafter cut from the backing paper, and the release resistance (g_{f}) was measured by peeling the backing paper strip at 180° using a Tensilon™ tester.

### Residual Adhesion

The silicone release composition was coated at approximately 1.0 g/m² on polyethylene-laminated kraft paper, and a cured release coating was then produced by heating in a forced circulation oven for 35 seconds at 160°C. Polyester tape (Polyester Tape 31B™ from Nitto Denko Company) was applied to the cured release coating, and the assembly was heated for 20 hours at 60°C under a load of 20 g_{f}/cm². The polyester tape was thereafter peeled off and applied to a stainless steel sheet. The peel resistance f (g_{f}) was measured by peeling the polyester tape at 180° using a Tensilon™ tester. In a blank experiment, the same type of polyester tape was applied to a sheet of Teflon™ instead of the cured release coating. This polyester tape was then peeled at 180° using a Tensilon tester to give the reference peel resistance f₀ (g_{f}) for the polyester tape. The percentage (%) calculated from the peel resistance f using the reference peel resistance f₀ as the basis is reported as the residual adhesion of the tacky substance.

### Example 1

The following were mixed to homogeneity: 100 weight parts dimethylvinylsiloxy-endblocked dimethylsiloxane-methylvinylsiloxane copolymer [vinyl content = 0.81 weight%, viscosity = 520 cP(mPa.s)], 3 weight parts trimethylsiloxy- endblocked methylhydrogensiloxane [viscosity = 20 cP(mPa.s)], 0.9 weight part methylbutynol, and 18 weight parts of an organosilicon polymer [viscosity = 140 cP(mPa.s)] whose main chain was comprised of a repeat unit with the following formula 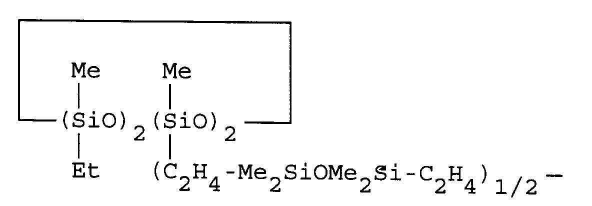
and whose terminals are groups with the following formula

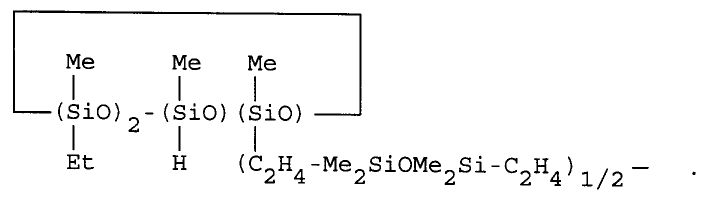

A solvent-free silicone release composition was then prepared by the addition, with mixing to homogeneity, of sufficient isopropanolic chloroplatinic acid solution to provide 190 ppm of platinum from the chloroplatinic acid, based on the weight of the aforementioned dimethylsiloxane-methylvinylsiloxane copolymer. The release resistance and residual adhesion of tacky substance was measured on the cured silicone release coating. These results are reported in Table 1.

### Comparative Example 1

A silicone release composition with a viscosity of 2,000 cP(mPa.s) was prepared according to Example 1, except 64 weight parts of silicone copolymer powder with the average unit formula

[CH₂=CH(CH₃)₂SiO_{1/2}]_{0.1}[(CH₃)₃SiO_{1/2}]_{0.7}(SiO_{4/2})_{1.0}

were used in place of the amount of organosilicon polymer in Example 1. The release resistance and residual adhesion of tacky substance was measured on the cured silicone release coating. These results are reported in Table 1.

### Example 2

A silicone release composition was prepared by mixing the following to homogeneity: 100 weight parts silanol-endblocked dimethylpolysiloxane gum, 7.1 weight parts trimethylsiloxy-endblocked methylhydrogensiloxane with a viscosity of 10 cP(mPa.s), 17 weight parts of the organosilicon copolymer used in Example 1 (this organosilicon copolymer was soluble in toluene), 5 weight parts dibutyltin diacetate, and 1,350 weight parts toluene. The release resistance and residual adhesion of tacky substance was measured on the cured silicone release coating. These results are reported in Table 1.

### Comparative Example 2

The procedure of Example 2 was followed, but without using the organosilicon polymer of Example 2. The release resistance and residual adhesion of tacky substance was measured on the cured silicone release coating. These results are reported in Table 1.

### Comparative Example 3

The procedure of Example 2 was again followed to prepare a silicone release composition, but in this case using silicone copolymer with the average unit formula

[CH₂=CH(CH₃)₂SiO_{1/2}]_{0.1}[(CH₃)₃SiO_{1/2}]_{0.7}(SiO_{4/2})_{1.0}

in place of the organosilicon polymer in Example 2. The release resistance and residual adhesion of tacky substance was measured on the cured silicone release coating. These results are reported in Table 1.

**Table 1**

| | Example 1 | Example 2 | Comp. Ex. 1 | Comp. Ex. 2 | Comp. Ex. 3 |
|---|---|---|---|---|---|
| Release Resistance (gf/5cm) | 120 | 100 | 56 | 22 | 44 |
| Residual Adhesion (%) | 99 | 94 | 77 | 94 | 74 |

### Example 3

The following were mixed to homogeneity: 100 weight parts trimethylsiloxy-endblocked dimethylsiloxane-methylvinylsiloxane copolymer gum (vinyl content = 0.91 weight%), 2 weight parts trimethylsiloxy-endblocked methylhydrogensiloxane with a viscosity of 10 cP(mPa.s), 0.9 weight part 3,5-dimethyl-3-hexen-1-yne, 2,000 weight parts toluene, and 17 weight parts of a toluene-soluble organosilicon polymer [viscosity = 80 cP(mPa.s), silicon-bonded hydrogen content = 0.2 weight%] comprised of units (k : l = 1 : 2) with the formulas 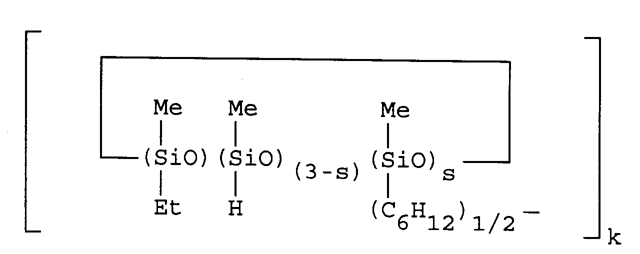
where s is 1, 2, or 3 and 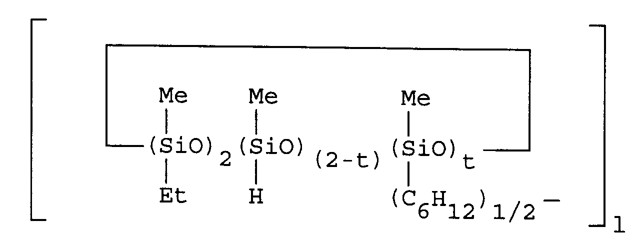
where t is 1 or 2.

A silicone release composition was then prepared by the addition, with mixing to homogeneity, of sufficient isopropanolic chloroplatinic acid solution to provide 100 ppm platinum from the chloroplatinic acid based on the aforementioned dimethylsiloxane-methylvinylsiloxane copolymer. The release resistance and residual adhesion of tacky substance was measured on the cured silicone release coating. These results are reported in Table 2.

### Comparative Example 4

The procedure of Example 3 was used to prepare a silicone release composition, but the organosilicon polymer was omitted and the addition of the trimethylsiloxy-endblocked methylhydrogensiloxane used in Example 3 was changed to 3.1 weight parts. The release resistance and residual adhesion of tacky substance was measured on the cured silicone release coating. These results are reported in Table 2.

**Table 2**

| | Example 3 | Comparative Example 4 |
|---|---|---|
| Release Resistance (gf/5cm) | 90 | 24 |
| Residual Adhesion (%) | 99 | 99 |

Because our silicone release composition comprises organosilicon polymer (B), it is surprisingly able to form cured release coatings that exhibit excellent release characteristics against tacky substances without reducing the residual adhesion of the tacky substance. This is shown by the results of Tables 1 and 2.

## Claims

1. A silicone composition for the formation of cured release coatings, wherein said composition comprises
(A) 100 weight parts of a coat-forming silicone composition into which there is admixed
(B) 0.5 to 500 weight parts organosilicon polymer with the following average unit formula 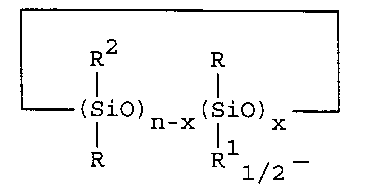 wherein each R is independently a C₁ to C₁₀ monovalent hydrocarbon group that are free of aliphatic unsaturation;
R¹ is an organic group selected from C₂ to C₂₀ alkylene groups, organic groups with the formula -R³(OR³)_{y}- where each R³ is independently a C₂ to C₂₀ alkylene group and y is an integer with a value of 1 or more, and organic groups with the formula -R³-(R₂SiO)_{z}R₂Si-R³- where z is zero or an integer with a value of 1 or more;
R² is selected from C₁ to C₁₀ monovalent hydrocarbon groups, hydrogen atom, C₁ to C₁₀ alkoxy groups, and the hydroxyl group;
n is an integer with a value of at least 3 but no greater than 20;
x is an integer with a value of at least 1 but no greater than 13; and
n ≧ x.

2. The silicone composition as claimed in claim 1 wherein component (B) is a straight-chain organosilicon polymer whose main chain is comprised of repeat unit(s) with the following formula 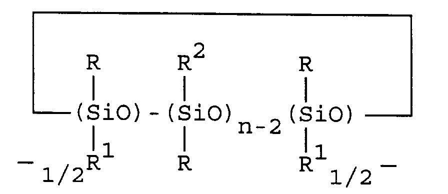 and whose terminals are selected from groups with the following formula 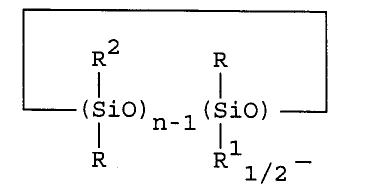 wherein each R, R¹, R^{2,} R³ and n are defined as above.

3. The silicone composition as claimed in claim 1 wherein component (B) is organosilicon polymer whose main chain is comprised of repeat units with the following formula 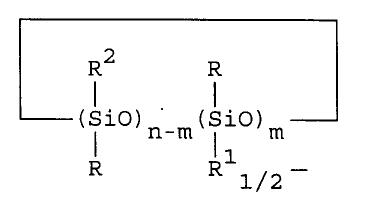 and whose terminals are selected from groups with the following formula 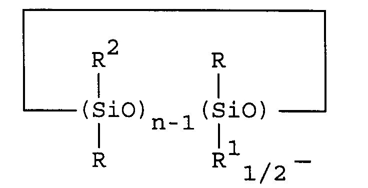 wherein each R, R¹, R², R³, and n are defined as above,
m is an integer with a value of at least 2 but no greater than 13, and
n ≧ m;
with the proviso that the organosilicon polymer contains in each molecule at least one 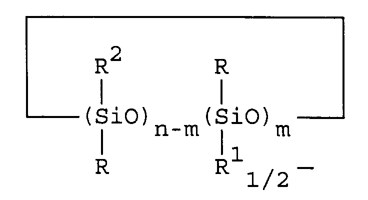 unit in which m is at least 3.

4. The silicone composition as claimed in claim 2 wherein the repeat units of the organosilicon polymer have the formula 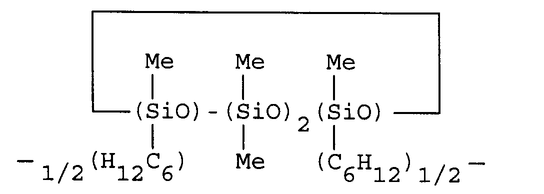 and the terminals are groups with the formula

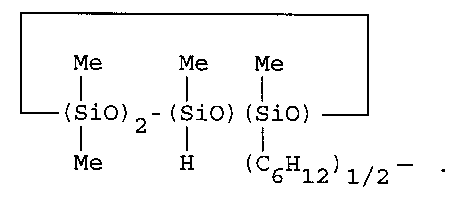

5. The silicone composition as claimed in claim 3 wherein the repeat units of the organosilicon polymer have the formulas 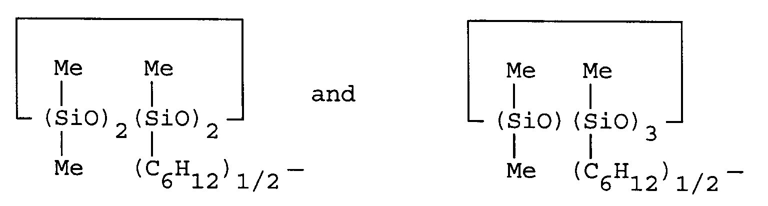 and the terminals are groups with the formula

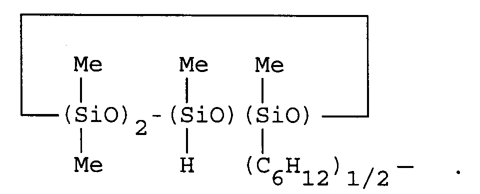

6. The silicone composition as claimed in claim 2 wherein the repeat units of the organosilicon polymer have the formulas 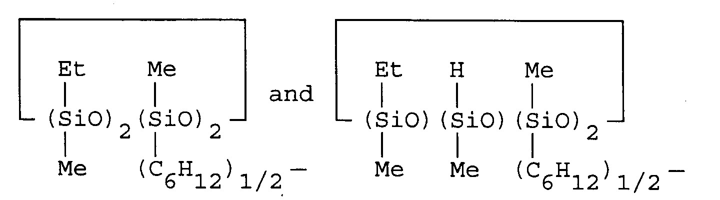 and the terminals are groups with the formula

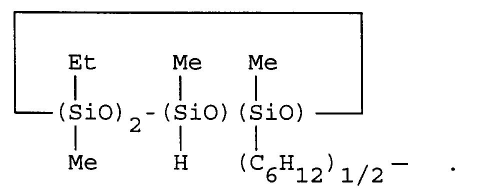

7. The silicone composition as claimed in claim 3 wherein the repeat units of the organosilicon polymer have the formulas 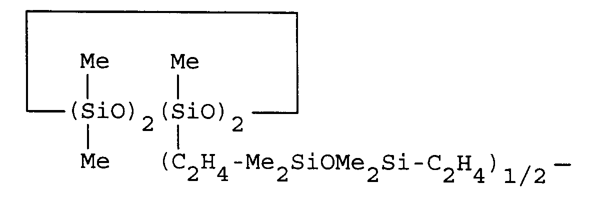 and 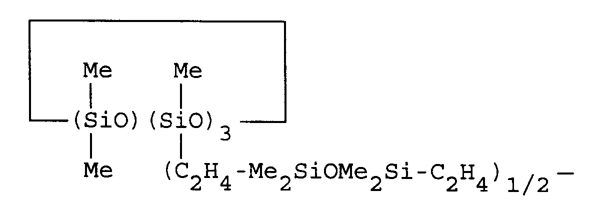 and the terminals are groups with the formula

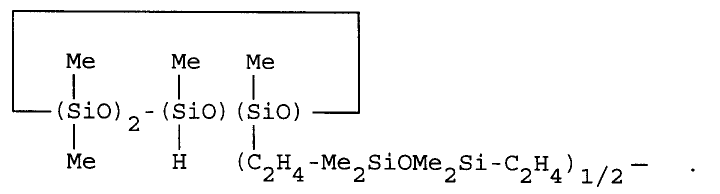

8. The silicone composition as claimed in claim 2 wherein the repeat units of the organosilicon polymer have the formula 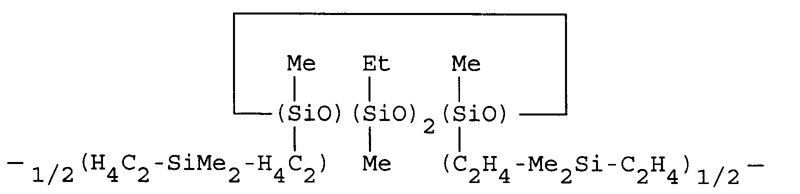 and the terminals are groups with the formula

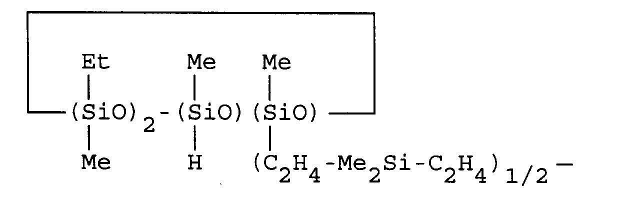

9. The silicone composition as claimed in claim 2 wherein in the organosilicon polymer is of the formula

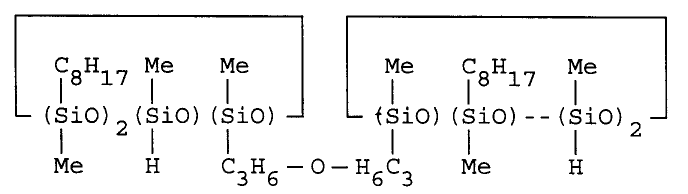

10. The silicone composition as claimed in claim 2 wherein the repeat units of the organosilicon polymer have the formula 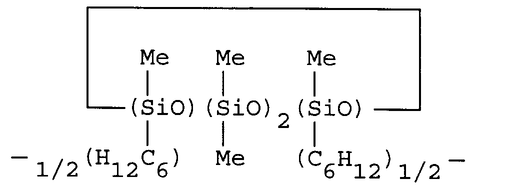 and the terminals are groups of the formula

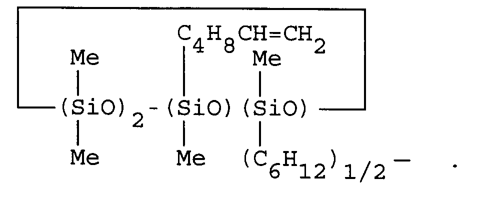

11. The silicone composition as claimed in claim 2 wherein the repeat units of the organosilicon polymer have the formulas 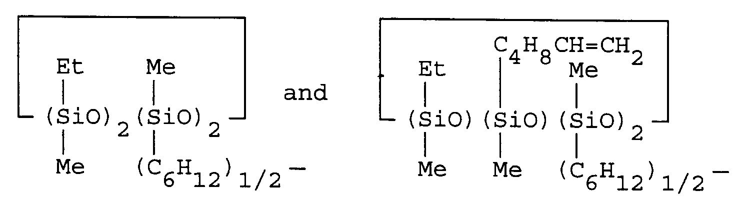 and the terminals are groups of the formula

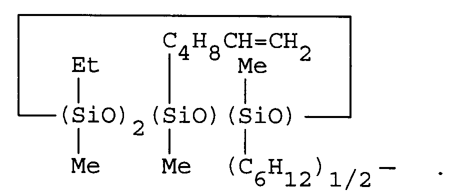

12. The silicone composition as claimed in claim 2 wherein the repeat units of the organosilicon polymer have the formula 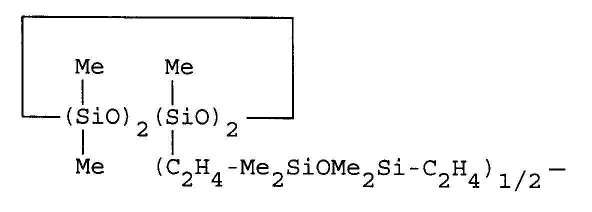 and the terminals are groups with the formula

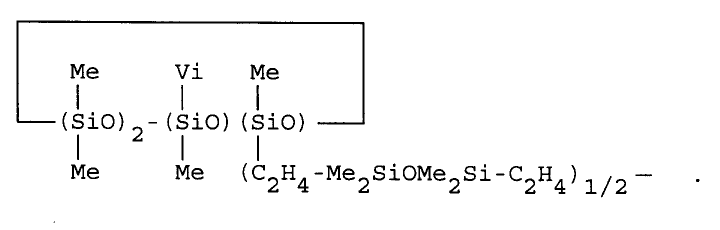

13. The silicone composition as claimed in claim 2 wherein the repeat units of the organosilicon polymer have the formula 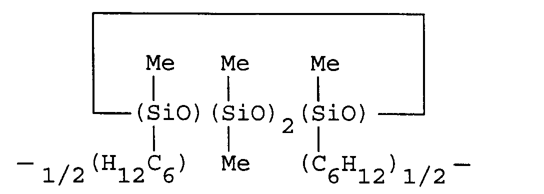 and the terminals are groups with the formula

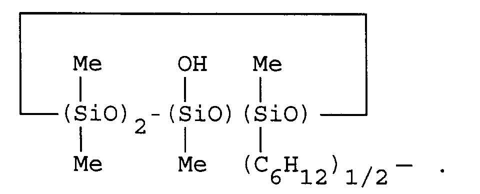

14. The silicone composition as claimed in claim 2 wherein the repeat units of the organosilicon polymer have the formulas 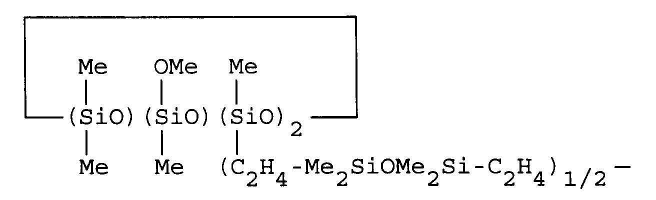 and 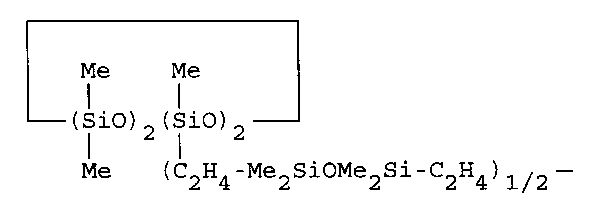 and the terminals are groups with the formula

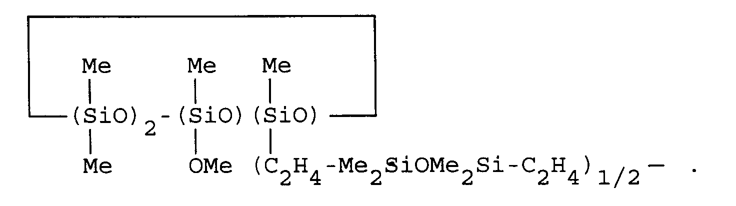

15. The silicone composition as claimed in claim 1 wherein component (A) is an addition reaction coat-forming silicone composition.

16. The silicone composition as claimed in claim 15 wherein the addition reaction coat-forming silicone composition comprises
(a) 100 weight parts organopolysiloxane that contains at least 2 alkenyl groups in each molecule and that has a viscosity at 25°C of at least 40 cP(mPa.s),
(b) 0.5 to 90 weight parts organohydrogenpolysiloxane that contains at least 3 silicon-bonded hydrogen atoms in each molecule and that has a viscosity at 25°C of 1 to 1,000 cP(mPa.s), and
(c) platinum catalyst, in a quantity that provides 0.1 to 1,000 weight parts of platinum metal for each 1,000,000 weight parts of the combined amount of components (a) and (b).

17. The silicone composition as claimed in claim 16 wherein the organopolysiloxane (a) is an organopolysiloxane with the average unit formula formula R⁴ₐSiO_{(4-a)/2} where R⁴ is a monovalent hydrocarbon group and subscript a has a value of 1.95 to 2.05 and containing endblocking groups selected from trimethylsiloxy, dimethylvinylsiloxy, dimethylphenylsiloxy, and dimethylhydroxysiloxy.

18. The silicone composition as claimed in claim 16 wherein the organohydrogenpolysiloxane (b) is an organohydrogenpolysiloxane with the average unit formula R⁵_{b}SiO_{(4-b)/2} where R⁵ is selected from hydrogen atom or monovalent hydrocarbon groups, excluding alkenyl groups, and subscript b ranges from 1.5 to 3.0 and containing endblocking groups selected from trimethylsiloxy, dimethylphenylsiloxy, dimethylhydrogensiloxy, and dimethylhydroxysiloxy.

19. The silicone composition as claimed in claim 16 wherein the platinum catalyst is selected from chloroplatinic acid, alcohol solutions of chloroplatinic acid, chloroplatinic acid/olefin complexes, chloroplatinic acid/vinylsiloxane complexes, chloroplatinic acid/ketone complexes, platinum supported on alumina micropowder, platinum supported on silica micropowder, and platinum black.

20. The silicone composition as claimed in claim 16 wherein there is additionally present in the composition an addition-reaction inhibitor.

21. The silicone composition as claimed in claim 1 wherein component (A) is a condensation reaction coat-forming silicone composition.

22. The silicone composition as claimed in claim 21 wherein the condensation reaction coat-forming silicone composition comprises
(a') 100 weight parts organopolysiloxane that contains at least 2 silanol groups in each molecule and that has a viscosity at 25°C of at least 40 cP(mPa.s),
(b') 0.5 to 90 weight parts organohydrogenpolysiloxane that contains at least 2 silicon-bonded hydrogen atoms in each molecule and that has a viscosity at 25°C of 1 to 1,000 cP(mPa.s), and
(c') 0.01 to 20 weight parts metal salt of an organic acid.

23. The silicone composition as claimed in claim 22 wherein the organopolysiloxane (a') is an organopolysiloxane with the average unit formula R⁶_{c}SiO_{(4-c)/2} where R⁶ is selected from a monovalent hydrocarbon group or hydroxyl group, subscript c has a value of 1.95 to 2.05 and contains endblocking groups selected from dimethylhydroxysiloxy and methylphenylhydroxysiloxy.

24. The silicone composition as claimed in claim 22 wherein the organohydrogenpolysiloxane (b') is selected from an organohydrogenpolysiloxane with the average unit formula R⁷_{d}SiO_{(4-d)/2} where R⁷ is selected from hydrogen atom or monovalent hydrocarbon groups and subscript d ranges from 1.5 to 3.0 and containing endblocking groups selected from trimethylsiloxy, dimethylphenylsiloxy, dimethylhydrogensiloxy, and dimethylhydroxysiloxy.

25. The silicone composition as claimed in claim 22 wherein the metal salt of organic acid is selected from dibutyltin diacetate, dibutyltin dioctoate, dibutyltin dilaurate, dioctyltin dilaurate, tin octoate, zinc naphthoate, and iron octoate.
